**Europäisches Patentamt**

**European Patent Office**

**Office européen des brevets**

(11) Veröffentlichungsnummer: **0 023 606**
**B1**

# EUROPÄISCHE PATENTSCHRIFT

(45) Veröffentlichungstag der Patentschrift:
**12.10.83**

(51) Int. Cl.³: **G 01 S 3/30, H 01 Q 25/00**

(21) Anmeldenummer: **80103988.4**

(22) Anmeldetag: **10.07.80**

(54) Antennensystem zur Peilung einer Mikrowellen-Signalquelle.

(30) Priorität: **19.07.79 DE 2929254**

(43) Veröffentlichungstag der Anmeldung:
**11.02.81 Patentblatt 81/6**

(45) Bekanntmachung des Hinweises auf die Patenterteilung:
**12.10.83 Patentblatt 83/41**

(84) Benannte Vertragsstaaten:
**BE FR GB IT NL**

(56) Entgegenhaltungen:
**EP-A-2 076**
**DE-A-2 752 680**
**DE-B-1 541 446**
**DE-C-807 101**
**DE-C-864 571**
**DE-C-1 039 108**
**US-A-3 836 929**

(73) Patentinhaber: **SIEMENS AKTIENGESELLSCHAFT,**
**Berlin und München Wittelsbacherplatz 2,**
**D-8000 München 2 (DE)**

(72) Erfinder: **Bredow, Reinhard, Dipl.-Ing., Gautinger**
**Strasse 15, Ortsteil Unterbrunn D-8035 Gauting (DE)**

Antennensystem zur Peilung einer Mikrowellen-Signalquelle

Die Erfindung bezieht sich auf ein Antennensystem zur Peilung einer Mikrowellensignale abgebenden Signalquelle unter Verwendung zweier für gleiche Frequenz ausgelegter Peilantennen, deren an sich gleiche Hauptstrahlungskeulen in der Peilebene zueinander winkelmässig versetzt sind, sich aber überlappen, so dass innerhalb des den Peilsektor bestimmenden Überlappungsbereichs durch Pegelvergleich oder durch Quotientbildung zweier mittels dieser Peilantennen empfangener Signalspannungen der Lagewinkel der Signalquelle festgestellt wird.

Ein solches Antennensystem in drehbarer Bauweise ist aus der DE-PS 807 101 bekannt. Dabei wird die Richtung der empfangenen Signale durch einen Pegelvergleich oder durch eine Quotientenbildung der zwei empfangenen Antennenspannungen im Hauptkeulenbereich festgestellt. Im Nebenzipfelbereich der einzelnen Antennencharakteristiken entstehen jedoch ebenfalls sich überlappende Seitenkeulen, was zu Fehlpeilungen oder zu Mehrdeutigkeiten führt. Einem bestimmten Quotientenwert kann dann kein eindeutiger Richtungswinkel bezüglich der Signalquelle zugeordnet werden.

Aus EP-A-2076 ist es bekannt, derartige Fehlpeilungen oder das Auftreten von Mehrdeutigkeiten durch einen weiteren Pegelvergleich mit den über eine Rundstrahlantenne empfangenen Signalen zu unterdrücken. Ist der Rundstrahlpegel stets grösser als der Nebenzipfelpegel einer Peilantenne, so wird die aus dieser Richtung einfallende elektromagnetische Welle für die Richtungsfindung nicht ausgewertet. Dazu ist allerdings ein weiterer Empfänger nötig. Bei Verwendung eines einzigen Empfängers müssen die Pegel von drei Antennen zeitlich nacheinander festgestellt werden.

Aufgabe der Erfindung ist es, demgegenüber eine weniger aufwendige Möglichkeit zur Richtungsfindung einer Mikrowellen-Signalquelle mit weitgehender Unterdrückung von Fehlpeilungen oder Mehrdeutigkeiten, die im Nebenzipfelbereich der Peilantennen aufgrund sich überlappender Seitenkeulen entstehen, anzugeben.

Gemäss der Erfindung wird diese Aufgabe dadurch gelöst, dass jeder der beiden Peilantennen ein Zusatzstrahler zugeordnet ist und die Hauptstrahlrichtungen dieser beiden Zusatzstrahler symmetrisch zueinander jeweils um einen bestimmten Winkel zur Hauptstrahlrichtung der zugeordneten Peilantenne in der Peilebene nach aussen versetzt sind und dass jede der beiden Peilantennen mit dem ihr jeweils zugeordneten Zusatzstrahler elektrisch derart zusammengeschaltet ist, dass sich die empfangenen Signalspannungen nach Betrag und Phase so überlagern, dass sich in der Peilebene für jede Peilantenne ein bezüglich der Hauptstrahlungsrichtung dieser Peilantenne auf einer Seite ausserhalb des Peilsektors angehobener Strahlungspegel ergibt.

Die Peilantenne und der ihr zugeordnete Zusatzstrahler werden in zweckmässiger Weise mit ihren Phasenzentren bezüglich der Peilebene übereinander angeordnet und geeignet zusammengeschaltet. Die empfangenen Signalspannungen von jeweils einer Peilantenne und dem ihr zugeordneten Zusatzstrahler werden nach Betrag und Phase z.B. in einem Richtkoppler oder in einer kombinierten Serien- oder Parallelverzweigung mit entkoppelten Verzweigungen, beispielsweise einem magischen T, überlagert. In einem grossen Winkelbereich ausserhalb des Peilbereiches ist dadurch der angehobene Strahlungspegel der einen Antennenanordnung, welche aus der einen Peilantenne und dem ihr zugeordneten Zusatzstrahler besteht, stets grösser als der auf dieser Seite nicht angehobene Strahlungspegel der anderen Antennenanordnung, die aus der anderen Peilantenne und dem dieser zugeordneten Zusatzstrahler zusammengesetzt ist.

Beim Antennensystem nach der Erfindung kann jede der beiden Peilantennen aus mehreren, in einer baulichen Einheit zusammengefassten und gemeinsam rotierenden Einzelantennen bestehen, von denen jede ein Teilfrequenzband eines breiten Frequenzbereiches überdeckt. Die Teilfrequenzbänder der Einzelantenne entsprechen dabei den Bändern eines unter anderem auch zur Pegelauswertung heranziehbaren, den sehr breiten Frequenzbereich mit mehreren Frequenzteilbändern abdeckenden Überwachungsempfängers. Hierbei ist in zweckmässiger Weise einer Einzelantenne oder mehreren Einzelantennen zugleich ein gegebenenfalls hinsichtlich seiner Bandbreite mehrere Frequenzteilbänder überdeckender Zusatzstrahler zugeordnet.

Wird durch eine logische Vorschrift die Richtungsfindung nur dann durchgeführt, wenn beim Pegelvergleich oder bei der Quotientenbildung der beiden mit Hilfe der beiden Antennenanordnungen empfangenen Signalspannungen ein bestimmter Grenzwert dem Betrag nach nicht überschritten wird, so werden alle möglichen Peilungen im Nebenzipfelbereich weitgehend unterdrückt, da der angehobene Strahlungspegel so gewählt werden kann, dass hier der bestimmte Grenzwert dem Betrag nach nicht unterschritten wird. Für die Quotientenbildung reicht ein Empfänger mit zwei getrennten Verstärkerkanälen aus. Bei einem Pegelvergleich, der zeitlich nacheinander mit einem einzigen Empfänger durchgeführt wird, müssen die Pegel von nur zwei Hochfrequenzspannungen verglichen werden.

Die Erfindung wird im folgenden anhand von sieben Figuren näher erläutert.

Es zeigen

Fig. 1 das Prinzipschaltbild eines bekannten Antennensystems ohne einseitig angehobene Strahlungspegel,

Fig. 2 ein Strahlungsdiagramm mit den zwei sich überlappenden Strahlungskeulen des Antennensystems nach Fig. 1,

Fig. 3 eine Peileichkurve des bekannten Antennensystems nach Fig. 1,

Fig. 4 das Prinzipschema eines Antennensystems mit einseitig angehobenem Nebenzipfelpegel nach der Erfindung,

Fig. 5 eine Peileichkurve des in Fig. 4 dargestellten Antennensystems,

Fig. 6 die Seitenansicht einer Antennenanordnung mit einer Peilantenne und einem Zusatzstrahler, entsprechend dem Antennensystem nach der Erfindung, und

Fig. 7 eine Draufsicht der in Fig. 6 dargestellten Antennenanordnung.

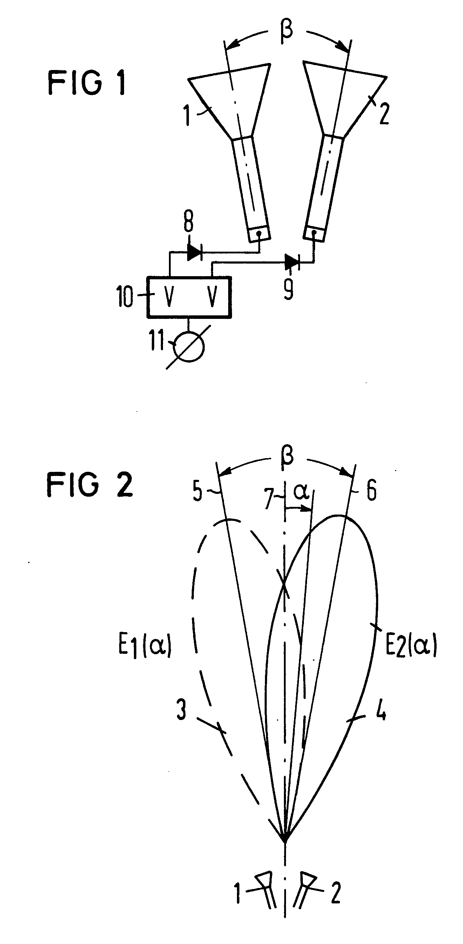

Das in Fig. 1 schematisch dargestellte, bekannte Antennensystem besteht aus zwei Peilantennen 1 und 2, deren Hauptstrahlrichtungen in des horizontal verlaufenden Peilebene (Azimutebene) um einen bestimmten Spreizwinkel $\beta$ divergieren. Dadurch entstehen zwei sich überlappende Strahlungskeulen.

Die Diagramm-Überlappung zweier von den Richtantennen 1 und 2 ausgehender Hauptkeulen 3 und 4 ist in Fig. 2 dargestellt. Die Hauptstrahlrichtungen 5 und 6 dieser beiden Hauptkeulen 3 und 4 liegen um einen Spreizwinkel $\beta$ von etwa 20° auseinander. Der Winkel $\alpha$ für einen beliebigen Diagrammpunkt beider Hauptkeulen 3 und 4 wird hier nicht auf die Hauptstrahlrichtung 5 bzw. 6, sondern in zweckmässiger Weise auf die Schnittpunktrichtung 7 der beiden Hauptkeulen 3 und 4 bezogen.

Die Pegelauswertung der mit den beiden Peilantennen 1 und 2 nach Fig. 1 empfangenen Signale erfolgt über zwei Gleichrichter 8 und 9 sowie über einen Zweikanal-Verstärker 10 in einem Quotientenmessgerät 11.

Bei einem Empfangssignal, das aus der Schnittpunktrichtung 7 einfällt, liefern beide Peilantennen 1 und 2 gleiche Empfangspegel $E_1(\alpha)$, $E_2(\alpha)$ an das Quotientenmessgerät 11. Fällt das Empfangssignal aus einer anderen Richtung ein, so sind die Empfangspegel $E_1(\alpha)$ und $E_2(\alpha)$ aufgrund der Antennencharakteristiken verschieden. Die Grösse der Empfangs-pegel oder der aus ihnen gebildete Quotient sind somit vom Azimutwinkel $\alpha$ abhängig.

Der Peilwinkel für die Ortung eines Zieles wird mit Hilfe des Quotienten von $E_1(\alpha)$ und $E_2(\alpha)$ bestimmt (E = Empfangsspannung). Eine Peileichkurve lässt sich mit dem Quotientenmessgerät 11 in Abhängigkeit vom Winkel $\alpha$ aufzeichnen.

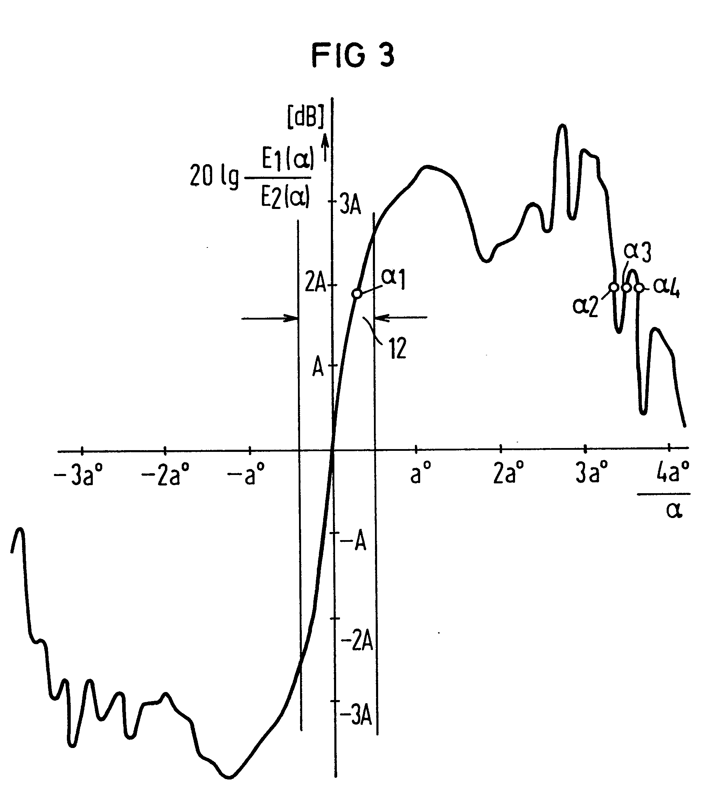

Das Beispiel einer solchen gemessenen Peileichkurve ist in Fig. 3 wiedergegeben. Werden für eine Signaleinfallsrichtung $\alpha$ die zwei Empfangspegel $E_1$ und $E_2$ beider Peilantennen gemessen und der Quotient (Pegeldifferenz) gebildet, so lässt sich über die Eichkurve der Zielwinkel bestimmen. Der eigentliche Peilbereich ist mit 12 bezeichnet. Die in Fig. 3 dargestellte Peileichkurve zeigt, dass manchen in der Abszisse dargestellten Quotienten $E_1/E_2$ ein, zwei oder mehrere Peilwinkel $\alpha$ zugeordnet werden können, da im Strahlungsbereich ausserhalb der Hauptkeule mehrere Überlappungspunkte der beiden Antennecharakteristiken vorkommen können. In Fig. 3 ist ein Beispiel mit den vier verschiedenen Peilwinkeln $\alpha_1$, $\alpha_2$, $\alpha_3$ und $\alpha_4$ eingezeichnet, bei denen stets der gleiche Quotientenwert $E_1/E_2$ gemessen wird. Im eigentlichen Peilbereich 12 befindet sich aber nur der Peilwinkel $\alpha_1$. Diese nachteilige Auswirkung wird mit Nebenzipfelpeilung bezeichnet.

Durch das Antennensystem nach der Erfindung wird der Strahlungspegel einer Peilantenne ausserhalb der Hauptkeule einseitig durch einen Zusatzstrahler angehoben, um solche Überlappungspunkte der beiden Strahlungscharakteristiken ausserhalb der Hauptstrahlrichtung zu vermeiden.

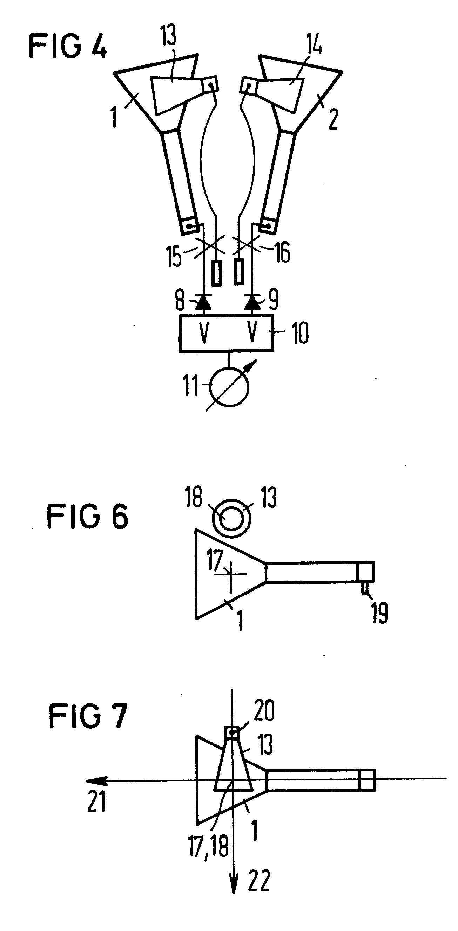

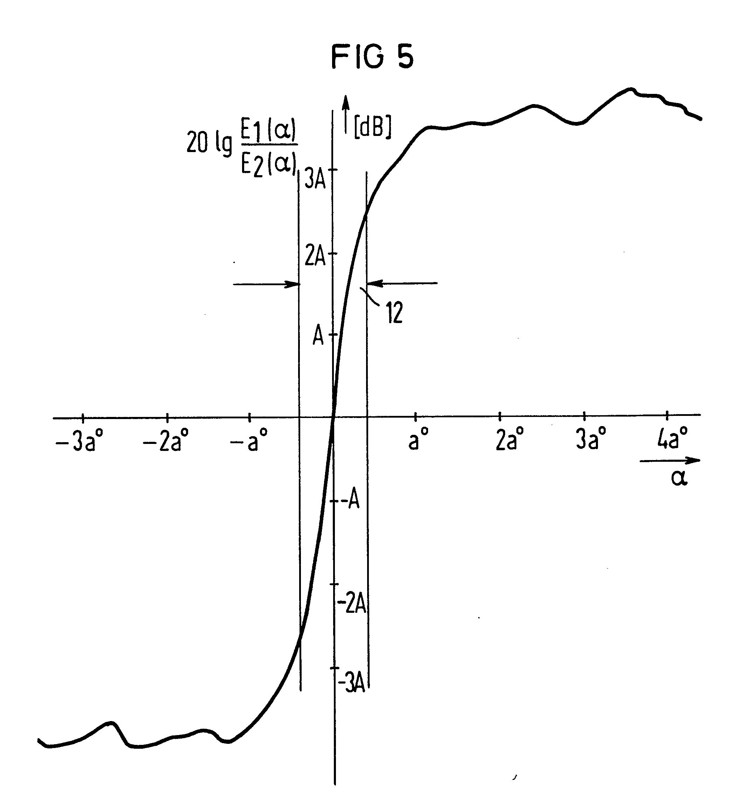

Fig. 4 zeigt das Schema eines solchen Antennensystems nach der Erfindung. Innerhalb der Peilebene jeweils ungefähr senkrecht zur Hauptstrahlrichtung der beiden Peilantennen 1 und 2 ist ein Zusatzstrahler 13 bzw. 14 mit seiner Hauptstrahlrichtung angeordnet. Die Empfangsspannungen der beiden Zusatzstrahler 13 und 14 werden mittels zweier Richtkoppler 15 und 16 den Empfangsspannungen von jeweils einer Peilantenne 1 und 2 nach Betrag und Phase überlagert. Die elektrisch unterschiedlichen Weglängen bis zum Richtkoppler lassen sich mit einstellbaren Phasenschiebern ausgleichen. Im Hauptkeulenbereich der beiden Peilantennen 1 und 2 nimmt der Pegel des jeweils zugeordneten Zusatzstrahlers 13 bzw. 14 schnell ab, so dass hier ein Phasengleichlauf der beiden Strahlungscharakteristiken nicht erforderlich ist. Dies gilt in entsprechender Weise auch für den Hauptkeulenbereich der beiden Zusatzstrahler 13 bzw. 14. Der Phasengleichlauf ist insbesondere wesentlich für diejenige Strahlrichtung, aus der die beiden Peilantennen 1 und 2 auf der einen Seite und der jeweils zugeordnete Zusatzstrahler 13 bzw. 14 auf der anderen Seite gleiche Pegel empfangen. Hinsichtlich der Pegelauswertung, d.h. der Quotientenermittlung stimmt das in Fig. 4 dargestellte Antennensystem mit demjenigen nach Fig. 1 überein.

Eine Peileichkurve des Antennensystems nach Fig. 4 zeigt der Kurvenverlauf in Fig. 5. Es geht daraus hervor, dass jedem bestimmten Quotientenwert $E_1/E_2$ zweier Antennenspannungen im dargestellten Bereich ein eindeutiger Richtungswinkel $\alpha$ zugeordnet werden kann.

Die Figuren 6 und 7 zeigen in einer Seitenansicht bzw. in einer Draufsicht eine Antennenanordnung für das Antennensystem nach der Erfindung, bestehend aus einer Peilantenne 1 und einem dieser zugeordneten Zusatzstrahler 13. Die Peilantenne und der Zusatzstrahler 13 sind mit ihren Phasenzentren 17 und 18 bezüglich der Peilebene übereinander angeordnet. Sie weisen koaxiale Auskopplungen 19 und 20 auf, von denen die beiden Antennenspannungen dem Richtkoppler (Fig. 4) zugeführt werden. Die Hauptstrahlrichtungen 21 und 22 der Peilantenne 1 bzw. des Zusatzstrahlers 13 liegen in der Peilebene und sind zueinander etwa senkrecht.

## Patentansprüche

1. Antennensystem zur Peilung einer Mikrowellensignale abgebenden Signalquelle unter Verwendung zweier für gleiche Frequenz ausgelegter Peilantennen (1, 2), deren an sich gleiche Hauptstrahlungskeulen (3, 4) in der Peilebene zueinander winkelmässig ($\beta$) versetzt sind, sich aber überlappen, so dass innerhalb des den Peilsektor (12) bestimmenden Überlappungsbereichs durch Pegelvergleich oder durch Quotientenbildung zweier mittels dieser Peilantennen empfangener Signalspannungen der Lagewinkel ($\alpha$) der Signalquelle festgestellt wird, dadurch gekennzeichnet, dass jeder der beiden Peilantennen (1, 2) ein Zusatzstrahler (13, 14) zugeordnet ist und die Hauptstrahlrichtungen dieser beiden Zusatzstrahler (13, 14) symmetrisch zueinander jeweils um einen bestimmten Winkel zur Hauptstrahlrichtung (5, 6) der zugeordneten Peilantenne (1, 2) in der Peilebene nach aussen versetzt sind, und dass jede der beiden Peilantennen (1, 2) mit dem ihr jeweils zugeordneten Zusatzstrahler (13, 14) elektrisch derart zusammengeschaltet ist, dass sich die empfangenen Signalspannungen nach Betrag und Phase so überlagern, dass sich in der Peilebene für jede Peilantenne ein bezüglich der Hauptstrahlungsrichtung dieser Peilantenne auf einer Seite ausserhalb des Peilsektors (12) angehobener Strahlungspegel ergibt.

2. Antennensystem nach Anspruch 1, dadurch gekennzeichnet, dass jeweils eine Peilantenne (z.B. 1) und der ihr zugeordnete Zusatzstrahler (13) in bezug auf die Peilebene mit ihren Phasenzentren (17, 18) übereinander angeordnet sind.

3. Antennensystem nach Anspruch 1 oder 2, dadurch gekennzeichnet, dass die Peilebene die Azimutebene ist und die beiden Peilantennen (1, 2) zusammen mit den ihnen zugeordneten Zusatzstrahlern (13, 14) mechanisch gemeinsam um eine vertikale Drehachse rotieren.

4. Antennensystem nach einem der vorhergehenden Ansprüche, dadurch gekennzeichnet, dass zur elektrischen Zusammenschaltung von jeweils einer Peilantenne mit dem ihr zugeordneten Zusatzstrahler ein Richtkoppler (15, 16) vorgesehen ist.

5. Antennensystem nach einem der Ansprüche 1 bis 3, dadurch gekennzeichnet, dass zur elektrischen Zusammenschaltung von jeweils einer Peilantenne mit dem ihr zugeordneten Zusatzstrahler eine kombinierte Serien- oder Parallelverzweigung mit entkoppelten Verzweigungen, zum Beispiel einem magischen T, vorgesehen ist.

6. Antennensystem nach Anspruch 4 oder 5, dadurch gekennzeichnet, dass dass zum Ausgleich unterschiedlicher Weglängen ein einstellbarer Phasenschieber in der Signalleitung zum Zusatzstrahler (13, 14) oder in der Signalleitung zur Peilantenne (1, 2) vorgesehen ist.

7. Antennensystem nach einem der vorhergehenden Ansprüche, dadurch gekennzeichnet, dass jede der beiden Peilantennen (1, 2) in bezug zu dem ihr zugeordneten Zusatzstrahler (13, 14) so angeordnet ist, dass die beiden Hauptstrahlrichtungen in der Peilebene etwa senkrecht zueinander liegen.

8. Antennensystem nach einem der vorgehenden Ansprüche, dadurch gekennzeichnet, dass beim Pegelvergleich bzw. bei der Quotientenbildung ein bestimmter Grenzwert dem Betrag nach nicht überschritten wird und dass der sich durch die Zusammenschaltung von jeweils einer Peilantenne (1, 2) mit dem dieser zugeordneten Zusatzstrahler (13, 14) ergebende, angehobene Strahlungspegel so gewählt ist, dass hier der bestimmte Grenzwert dem Betrag nach nicht unterschritten wird.

9. Antennensystem nach einem der vorhergehenden Ansprüche, wobei jede Peilantenne aus mehreren, in einer baulichen Einheit zusammengefassten und gemeinsam rotierenden Einzelantennen besteht, von denen jede ein Teilfrequenzband eines breiten Frequenzbereiches überdeckt, und wobei die Teilfrequenzbänder der Einzelantennen den Bändern eines unter anderem auch zur Pegelauswertung heranziehbaren, den sehr breiten Frequenzbereich mit mehreren Frequenzteilbändern abdeckenden Überwachungsempfängers entsprechen, dadurch gekennzeichnet, dass einer Einzelantenne oder mehreren Einzelantennen zugleich ein gegebenenfalls hinsichtlich seiner Bandbreite mehrere Frequenzteilbänder überdeckender Zusatzstrahler zugeordnet ist.

## Claims

1. An antenna system for the direction-finding of a micro-wave signal source, employing two direction-finding antennae (1, 2) designed for a common frequency, whose main radiation lobes (3, 4) are mutually identical and angularly ($\beta$) offset relative to one another in the direction-finding plane but overlap to provide an overlap range which determines the direction-finding sector (12) by means of which level-comparison or formation of the quotient of two signal voltages received via these direction-finding antennae can be effected to ascertain the location angle ($\alpha$) of the signal source, characterised in that each of the two direction-finding antennae (1, 2) is assigned an additional radiator element (13, 14) and the main radiation lobes of these two additional radiator elements (13, 14) are externally offset mutually symmetrically at a specific angle to the directions (5, 6) of the main radiation lobes of the assigned direction-finding antenna (1, 2) in the direction-finding plane, each of the two direction-finding antennae (1, 2) being electrically coupled to its assigned radiator element (13, 14) in such manner that the received signal voltages overlap in terms of amount and phase so that in the direction-findig plane there is obtained a radiation level accentuated on one side outside of the direction finding sector (12) relative to the main radiation direction for each direction-finding antenna.

2. An antenna system as claimed in claim 1, characterised in that a direction-finding antenna (e.g. 1) and the additional radiator element (13) assigned thereto are arranged one above another relative to the direction-finding plane in respect of their phase centres (17, 18).

3. An antenna system as claimed in claim 1 or 2, characterised in that the direction-finding plane is the azimuthal plane, and the two direction-finding antennae (1, 2) mechanically rotate together with their assigned additional radiator elements (13, 14) about a common vertical axis of rotation.

4. An antenna system as claimed in one of the preceding claims, characterised in that a directional coupler (15, 16) is provided for the electrical coupling of a direction-finding antenna to the additional radiator element assigned thereto.

5. An antenna system as claimed in one of the claims 1 to 3, characterised in that there is provided a combined series or parallel junction with decoupled branches, for example a magic-T, for the electrical coupling of a direction-finding antenna to the additional radiator element assigned thereto.

6. An antenna system as claimed in claim 4 or 5, characterised in that an adjustable phase shift device for the compensation of different path lengths is arranged in the signal line to the additional radiator element (13, 14) or in the signal line to the direction-finding antenna (1, 2).

7. An antenna system as claimed in one of the preceding claims, characterised in that each of the two direction-finding antennae (1, 2) is arranged in such manner relative to its assigned additional radiator element (13, 14) that the two main radiation lobe directions are approximately at right angles to one another in the direction-finding plane.

8. An antenna system as claimed in one of the preceding claims, characterised in that during the level comparison or during the quotient formation a specific limit value total is not overshot, and that the accentuated radiation level which results from the coupling of a direction-finding antenna (1, 2) to the additional radiator element (13, 14) assigned thereto is selected to be such that the specified limit value total is not undershot.

9. An antenna system as claimed in one of the preceding claims, where each direction-finding antenna consists of a plurality of commonly rotating individual antennae combined in a structural unit, each of which individual antennae covers a frequency sub-band of wide frequency band-width, and the frequency sub-bands of the individual antennae correspond to the bands of a monitoring receiver, one of the functions of which is to analyse the level, and which covers the very wide frequency band comprising a plurality of frequency sub-bands, characterised in that one or several individual antenna(e) is/are simultaneously assigned an additional radiator element whose band width covers a plurality of frequency sub-bands.

**Revendications**

1. Système d'antennes pour le repérage d'une source de signaux délivrant des signaux micro-ondes en utilisant deux antennes de repérage (1, 2) conçues pour la même fréquence, dont les lobes principaux (3, 4) identiques en eux-mêmes sont décalés angulairement ($\beta$) l'un par rapport à l'autre dans le plan de repérage mais se chevauchent, de sortie qu'à l'intérieur de la zone de chevauchement qui détermine le secteur de repérage (12), l'angle de position ($\alpha$) de la source de signaux est déterminé par comparaison du niveau ou par formation du quotient de deux tensions de signaux reçues au moyen de ces antennes de repérage, caractérisé par le fait qu'à chacune des deux antennes de repérage (1, 2) est associée une source de rayonnement supplémentaire (13, 14) et les directions de rayonnement principales de ces deux sources de rayonnement supplémentaires (13, 14) sont respectivement décalées vers l'extérieur dans le plan de repérage, symetriquement l'une par rapport à l'autre, d'un angle déterminé par rapport à la direction de rayonnement principale (5, 6) des antennes de repérage associées (1, 2), et que chacune des deux antennes de repérage (1, 2) est interconnectée électriquement avec la source de rayonnement supplémentaire (13, 14) qui lui est respectivement associée de manière que les tensions de signaux reçues se superposent, en amplitude et en phase, de sorte que pour chaque antenne de repérage il apparaît dans le plan de repérage un niveau de rayonnement augmenté d'un côté, à l'extérieur du secteur de repérage (12), par rapport à la direction de rayonnement principale de cette antenne de repérage.

2. Système d'antennes suivant la revendication 1, caractérisé par le fait qu'une antenne de repérage (par exemple 1) et la source de rayonnement supplémentaire (13) qui lui est associée sont disposées de manière que leurs centres de phase (17, 18) se trouvent l'un au dessus de l'autre, par rapport au plan de repérage.

3. Système d'antennes suivant la revendication 1 ou 2, caractérisé par le fait que le plan de repérage est le plan azimutal et que les deux antennes de repérage (1, 2) tournent mécaniquement en commun autour d'un axe de rotation vertical conjointement avec les sources de rayonnement supplémentaires (13, 14) qui leur sont associées.

4. Système d'antennes suivant l'une des revendications précédentes, caractérisé par le fait qu'un coupleur directif (15, 16) est prévu pour l'interconnexion électrique d'une antenne de repérage respective avec la source de rayonnement supplémentaire qui lui est associée.

5. Système d'antennes suivant l'une des revendications 1 à 3, caractérisé par le fait qu'un embranchement combiné série ou parallèle avec des branches découplées, par exemple un T magique, est prévu pour l'interconnexion électrique d'une antenne de repérage respective avec la source de rayonnement supplémentaire qui lui est associée.

6. Système d'antennes suivant la revendication 4 ou 5, caractérisé par le fait qu'un déphaseur réglable est prévu dans la ligne de signaux allant à la source rayonnement supplémentaire (13, 14) ou dans la ligne de signaux allant à l'antenne de repérage (1, 2), pour la compensation de parcours différents.

7. Système d'antennes suivant l'une des revendications précédentes, caractérisé par le fait que chacune des deux antennes de repérage (1, 2) est disposée par rapport à la source de rayonnement supplémentaire (13, 14) qui lui est associée de manière que les deux directions de rayonnement principales soient sensiblement perpendiculaires l'une à l'autre dans le plan de repérage.

8. Système d'antennes suivant l'une des revendications précédentes, caractérisé par le fait que lors de la comparaison de niveau ou lors de la formation du quotient une valeur limite déterminée en amplitude n'est pas dépassée, et que le niveau de rayonnement augmenté provenant de l'interconnexion d'une antenne de repérage respective (1, 2) avec la source de rayonnement supplémentaire (13, 14) qui lui est associée, est choisi de manière qu'ici la valeur limite déterminée en amplitude ne soit pas dépassée.

9. Système d'antennes suivant l'une des revendications précédentes, chaque antenne de repérage étant constituée par plusieurs antennes individuelles qui tournent en commun et qui sont réunies en un bloc constitutif, chacune de ces antennes individuelles recouvrant une bande de fréquence partielle d'une large gamme de fréquences, et les bandes de fréquences partielles des antennes individuelles correspondant aux bandes d'un récepteur de surveillance recouvrant la gamme de fréquences trés large comportant plusieurs bandes de fréquences partielles et pouvant être utilisé entre autres également pour l'évaluation de niveau, caractérisé par le fait qu'à une antenne individuelle ou à plusieurs antennes individuelles à la fois est associée une source de rayonnement supplémentaire dont la largeur de bande recouvre éventuellement plusieurs bandes de fréquences partielles.

FIG 1

FIG 2

# FIG 3

FIG 4

FIG 6

FIG 7

# FIG 5

$20 \lg \dfrac{E_1(\alpha)}{E_2(\alpha)}$